# EUROPEAN PATENT APPLICATION

(11) **EP 4 071 465 A1**
(43) Date of publication of application: **12.10.2022**
(21) Application number: 20897252.1
(22) Date of filing: 01.12.2020
(51) Int. Cl.: G01N 23/223

(54) **X-RAY FLUORESCENCE ANALYZER**

(30) Priority: 02.12.2019 JP 2019218357
(71) Applicant: HORIBA Advanced Techno, Co., Ltd., Kyoto 601-8551 (JP)
(72) Inventor: NII, Hajime, Kyoto-shi, Kyoto 601-8510 (JP)
(74) Representative: Müller-Boré & Partner Patentanwälte PartG mbB
(86) International application number: PCT/JP2020/044668
(87) International publication number: WO 2021/112080

(57) **Abstract**

In order to provide an X-ray fluorescence analyzer that can accurately obtain a concentration of an element to be measured by generating a fluorescent X-ray only from an element to be measured or generating a very small amount of fluorescent X-ray from an element to be excluded, even in the case where, for example, atomic numbers of a plurality of elements contained in a liquid sample are close to each other such as in phosphorus (P) and silicon (Si), an X-ray fluorescence analyzer 100 is configured to analyze a liquid sample containing a first element to be measured and a second element having the atomic number larger than the atomic number of the first element, the X-ray fluorescence analyzer including: an X-ray source (1) that emits a first X-ray; a secondary target (3) that generates the second X-ray by being excited by the first X-ray; a detector (6) that detects a fluorescent X-ray generated by the second X-ray incident on the liquid sample (LS); and a concentration calculator (7) that calculates a concentration of the first element in the liquid sample (SP) based on an output of the detector (6), wherein, E1 < EP < E2 is satisfied, where E1 represents an energy of an absorption edge of the first element, E2 represents an energy of an absorption edge of the second element, and EP represents an energy peak of the second X-ray.

## Description

### Technical Field

The present invention relates to an X-ray fluorescence analyzer that can measure a concentration of an element contained in a liquid sample.

### Background Art

In the wet etching of a nitride film in a semiconductor manufacturing process, it is known that a silicon concentration in phosphoric acid affects an etching rate. Therefore, the silicon concentration in the phosphoric acid is measured, and a quality of the phosphoric acid is controlled.

Conventionally, the silicon concentration in phosphoric acid is measured by, for example, an ion selective electrode method (see Patent Literature 1). In this method, because the phosphoric acid needs to be cooled to a predetermined temperature, the silicon concentration in phosphoric acid circulating at a high temperature in an etching control device cannot be measured in-line. In addition, because this measurement method has a problem of high running cost, a more user-friendly measurement method is required.

Incidentally, it has not been industrially attempted to use X-ray fluorescence analysis for measuring the silicon concentration in phosphoric acid.

This is because a fluorescent X-ray generated by exciting a light element such as silicon (Si) is lower in intensity and also lower in energy than a heavy element, a degree of attenuation by the atmosphere is large, and thus, a background influence by a scattered X-ray generated simultaneously with the fluorescent X-ray becomes large in the output of a detector, which causes difficulty in quantitative analysis of silicon. Further, in the X-ray fluorescence analysis using a dispersive crystal, the concentration cannot be measured accurately because a drive unit that drives the dispersive crystal and the dispersive crystal itself are affected by the temperature due to the high-temperature phosphoric acid. In addition, when the energy of the fluorescent X-ray to be measured is to be selected by a filter, the intensity to be detected decreases, and thus, the use of filter is not suitable for the X-ray fluorescence analyzer for a light element such as silicon (Si).

In addition, the fact that the silicon concentration in the phosphoric acid used for etching is very small causes difficulty in obtaining an accurate silicon concentration by separating the spectra of the respective elements.

### Citation List

### Patent Literature

Patent Literature 1: JP 2016-006434 A

### Summary of Invention

### Technical Problem

The present invention has been made in view of the above-described problems, and it is an object of the present invention to provide an X-ray fluorescence analyzer that can accurately obtain a concentration of an element to be measured by generating the fluorescent X-ray only from the element to be measured or generating a very small amount of fluorescent X-ray from an element to be excluded, even in the case where, for example, atomic numbers of a plurality of elements contained in a liquid sample are close to each other such as in phosphorus (P) and silicon (Si).

### Solution to Problem

That is, an X-ray fluorescence analyzer according to the present invention is an X-ray fluorescence analyzer configured to analyze a liquid sample containing a first element to be measured and a second element having an atomic number larger than the atomic number of the first element, the X-ray fluorescence analyzer including: an X-ray source that emits a first X-ray; a secondary target that is excited by the first X-ray and generates a second X-ray; a detector that detects a fluorescent X-ray generated by the second X-ray incident on the liquid sample; and a concentration calculator that calculates a concentration of the first element in the liquid sample based on an output of the detector, wherein, E1 < EP < E2 is satisfied, where E1 represents an energy of an absorption edge of the first element, E2 represents an energy of an absorption edge of the second element, and EP represents an energy peak of the second X-ray.

With this configuration, only the fluorescent X-ray of the first element to be measured can be generated by the second X-ray without the fluorescent X-ray of the second element to be excluded being generated. Therefore, even in the case where the atomic numbers of the first element and the second element are close to each other and the concentration of the first element is much smaller than the concentration of the second element, the concentration of the first element can be accurately measured from the peak intensity of the fluorescent X-ray of the first element.

In the X-ray fluorescence analysis, the liquid sample can be measured as it is without being cooled, and for example, the liquid sample can be measured in-line as well as in batch.

A specific configuration example suitable for accurately measuring the silicon concentration in the phosphoric acid used in the semiconductor manufacturing process includes a configuration in which the first element is silicon (Si), the second element is phosphorus (P), and the secondary target is formed of phosphorus (P). With this configuration, the second X-ray, which is the fluorescent X-ray excited from phosphorus (P) constituting the secondary target, is smaller in energy than the energy of the absorption edge of phosphorus (P). Therefore, the fluorescent X-ray can be prevented from being generated from phosphorus contained in the liquid sample. In addition, because the energy of fluorescent X-ray of phosphorus (P) is larger than the energy of the absorption edge of silicon (Si), the fluorescent X-ray is generated from silicon (Si) in the liquid sample. Therefore, the fluorescent X-ray is generated only from silicon (Si) contained in the phosphoric acid, and the concentration of silicon can be obtained from the intensity of the fluorescent X-ray.

Another aspect of the secondary target from which the concentration of silicon (Si) can be accurately obtained by generating only a small amount of fluorescent X-ray from phosphorus (P) in the phosphoric acid and a large amount of fluorescent X-ray from silicon (Si) is exemplified by a secondary target in which the first element is silicon (Si), the second element is phosphorus (P), and the secondary target is formed of yttrium (Y) or zirconium (Zr).

Further, in the X-ray fluorescence analyzer according to the present invention, an irradiation center and a visual field center are separated from each other on a sample surface of the liquid sample, the irradiation center being an intersection of an irradiation optical axis of the second X-ray to the sample surface and the visual field center being an intersection of a detection optical axis of the detector to the sample surface.

With this configuration, because the detector sets a position deviated from the irradiation center on the sample surface as the visual field center, a component among the scattered X-ray of the second X-ray in a scattering direction having high intensity generated at the irradiation center can be made less easy to enter the visual field of the detector. On the other hand, because the fluorescent X-ray generated at the irradiation center is uniformly emitted in all directions, even if the irradiation center and the visual field center are displaced from each other, the amount of fluorescent X-ray incident on the visual field of the detector does not decrease as compared with the amount of scattered X-ray. Therefore, the influence of the scattered X-ray on the background with respect to the output of the detector is reduced, and the detection lower limit of the fluorescent X-ray can be lowered. From these, for example, even the intensity of the fluorescent X-ray generated from the light element such as silicon (Si) can be measured without being buried in background noise.

As a configuration suitable for performing the X-ray fluorescence analysis on the liquid sample, the X-ray fluorescence analysis may further include an X-ray transmission film that is in contact with the liquid sample and forms the sample surface, in which the liquid sample may be irradiated with the second X-ray passing through the X-ray transmission film. With this configuration, because the X-ray fluorescence analysis can be performed by arranging the X-ray tube, the secondary target, and the detector and a measurement system on the lower side of the liquid sample, vapor of the liquid sample does not affect the measurement system even if the liquid sample evaporates. Therefore, the configuration is particularly suitable in the case where there is a risk of the measurement system being deteriorated by the vapor of the liquid sample such as phosphoric acid. In addition, in the case where the measurement system is arranged on the upper side of the liquid sample and a film or the like is provided to prevent the vapor of the liquid sample, there is a possibility that air bubbles are generated between the liquid sample and the film and unnecessary scattering that hinders X-ray fluorescence analysis occurs. However, if the liquid sample is analyzed from the lower side through the X-ray transmission film, this problem does not occur in the first place.

In order to maintain sufficient mechanical strength while achieving a thickness suitable for performing X-ray fluorescence analysis using the X-ray transmission film even when the liquid sample is at a high temperature, the X-ray transmission film may be formed of polyimide, aromatic polyether ketone, polyphenylene sulfide, aramid, graphene, or diamond-like carbon.

In order to decrease a measurement lower limit value by arranging each device close to each other to shorten an optical path of the fluorescent X-ray generated by the liquid sample to the detector and to be able to detect the fluorescent X-ray at higher intensity while preventing the scattered X-ray of the second X-ray generated in the liquid sample from being incident on the detector, and when the irradiation optical axis of the first X-ray is defined as a Z axis, an axis orthogonal to the Z axis at a light source point of the X-ray source and forming an XZ plane parallel to the sample surface is defined as an X axis, and an axis passing the light source point of the X-ray source and orthogonal to the X axis and the Z axis is defined as a Y axis, the secondary target may include a target surface on which the first X-ray is incident, and the target surface may be inclined with respect to the XZ plane and also with respect to a YZ plane.

A specific configuration example of the target surface includes a target surface that is inclined with respect to the XZ plane and the YZ plane to make a normal vector with respect to the target surface be (X,Y,Z) = (-1/2,1/√2,-1/2).

In order to increase a ratio of the fluorescent X-ray to the scattered X-ray incident on the detector and to further lower the detection lower limit, the detector may include a detection surface that detects the fluorescent X-ray, the detection surface may be inclined with respect to the XZ plane, and the detection surface may face the side of the X-ray source.

In order to generate the fluorescent X-ray at a plurality of locations in the liquid sample and to increase the intensity of the fluorescent X-ray incident on the detector by about a plurality of times, the secondary target may be formed of a plurality of target elements arranged so as to generate the second X-ray separately.

As a specific configuration example in which the intensity of the fluorescent X-ray generated in the liquid sample can be about doubled while the influence of the scattered X-ray is kept small with respect to the X-ray detected by the detector, there is a configuration in which two target elements are arranged so as to sandwich the detector.

Even in the case of the first element being silicon (Si) and the second element being phosphorus (P), the fluorescence analyzer of the present invention can reduce the running cost and accurately measure the concentration of silicon (Si) as compared with the ion selective electrode method. In addition, the concentration of silicon (Si) can also be measured in-line.

A specific configuration example for efficiently taking the fluorescent X-ray generated from the liquid material into the detector includes a configuration in which the irradiation center and the visual field center are separated by a distance of 3 mm or more and 10 mm or less.

### Advantageous Effects of Invention

As described above, in the X-ray fluorescence analyzer according to the present invention, the fluorescent X-ray can be generated only from the first element to be measured by the second X-ray, or only a small amount of fluorescent X-ray can be generated from the second element to be excluded. Therefore, even in the case where the atomic numbers of the first element and the second element are close to each other and the concentration of the first element is much smaller than the concentration of the second element, the concentration of the first element can be accurately measured from the peak intensity of the fluorescent X-ray of the first element.

### Brief Description of Drawings

FIG. 1 is a schematic perspective view illustrating an X-ray fluorescence analyzer according to an embodiment of the present invention.
FIG. 2 is a schematic view illustrating a configuration of the X-ray fluorescence analyzer according to the embodiment.
FIG. 3 is a schematic view of the X-ray fluorescence analyzer according to the embodiment as viewed along the Z-axis direction.
FIG. 4 is a schematic view of the X-ray fluorescence analyzer according to the embodiment as viewed along the Y-axis direction.
FIG. 5 is a schematic graph illustrating peaks and absorption edges of fluorescent X-rays of phosphorus (P) and silicon (Si).
FIG. 6 is a schematic view illustrating an X-ray fluorescence analyzer according to another embodiment of the present invention.

### Reference Signs List

- 100: X-ray fluorescence analyzer
- 1: X-ray source
- 2: primary collimator
- 3: secondary target
- 4: secondary collimator
- 5: X-ray transmission film
- 6: detector
- 7: concentration calculator

### Description of Embodiments

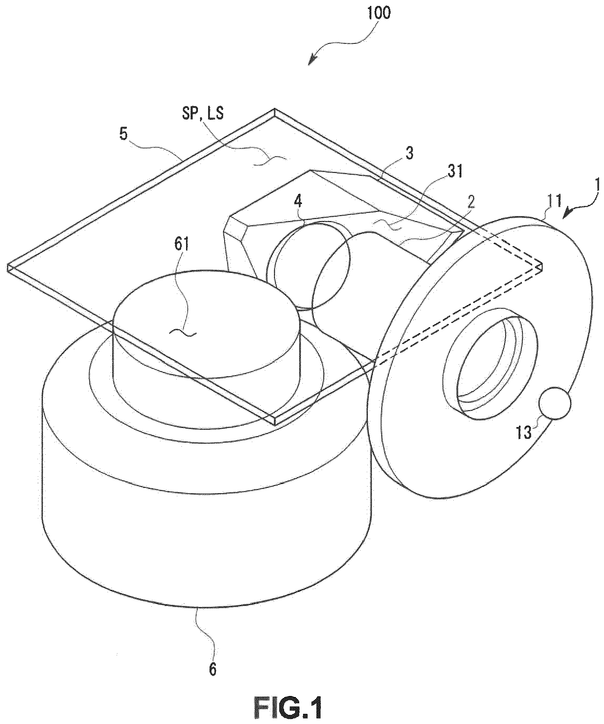

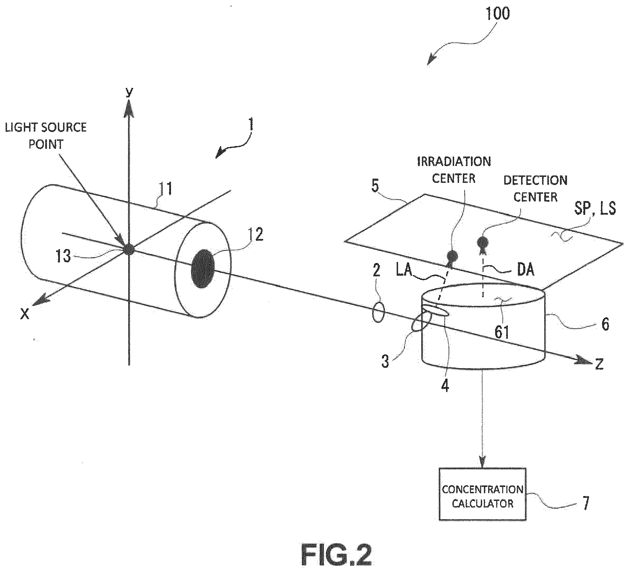

An X-ray fluorescence analyzer 100 according to an embodiment of the present invention is described with reference to FIGS. 1 to 5. The X-ray fluorescence analyzer 100 measures the concentration of silicon (Si), which is an element contained in a high-temperature phosphoric acid liquid used for, for example, wet etching of a nitride film in a semiconductor manufacturing process. For example, phosphoric acid is in a high temperature state of 100°C to 300°C, and in the present embodiment, this phosphoric acid is a liquid sample LS at a temperature of 160°C or around 160°C. In addition, silicon (Si) contained in phosphoric acid is a trace element that exists at a concentration of about 1/1000 to about 1/10000 with respect to phosphorus (P). That is, in phosphoric acid as the liquid sample LS, a first element to be measured is silicon (Si), and a second element having an atomic number larger than the atomic number of silicon (Si) is phosphorus (P). More specifically, the X-ray fluorescence analyzer 100 of the present embodiment performs the X-ray fluorescence analysis on a liquid sample containing a large amount of the second element having the atomic number larger by one than the atomic number of the first element. The X-ray fluorescence analyzer 100 of the present embodiment is used to measure the concentration of silicon (Si), for example, by partially sampling phosphoric acid that circulates in an etching apparatus and performing the X-ray fluorescence analysis in a liquid state without cooling. Therefore, the X-ray fluorescence analyzer 100 is configured such that only silicon (Si) is excited to derive a fluorescent X-ray and the fluorescent X-ray is not derived from phosphorus (P), or even if both silicon (Si) and phosphorus (P) are excited, the amount of fluorescent X-ray generated from phosphorus (P) is so small as to hardly affect the calculation of the concentration of silicon (Si).

Specifically, as illustrated in FIGS. 1 to 4, the X-ray fluorescence analyzer 100 includes at least an X-ray source 1, a primary collimator 2, a secondary target 3, a secondary collimator 4, an X-ray transmission film 5 in contact with a liquid sample LS, a detector 6, and a concentration calculator. The following description uses right-handed orthogonal coordinates which are set based on a light source point of the X-ray source 1, in such a manner that an emission direction of the first X-ray emitted from the X-ray source 1 is set to the Z axis. That is, an axis that is perpendicular to the Z axis through the light source point and forms a plane parallel to a sample surface SP of the liquid sample LS formed by the X-ray transmission film 5 is set as the X axis, and an axis that passes through the light source point and is perpendicular to the X axis and the Z axis is set as the Y axis. In the present embodiment, the sample surface SP and the XZ plane are horizontal planes, and the Y axis is aligned with the vertical direction.

The X-ray source 1 emits a first X-ray, and emits an X-ray having the energy different from the energy with which the liquid sample LS is irradiated. The secondary target 3 is irradiated with the first X-ray to generate the fluorescent X-ray, which is to be a second X-ray and with which the liquid sample LS is irradiated. The X-ray source 1 includes, for example, a vacuum container 11 whose inside is kept vacuum and which is formed with a beryllium (Be) window as an X-ray transmission window 12, an electron beam source (not illustrated) provided in the vacuum container 11, and a primary target 13 on which electrons emitted from the electron beam source are incident and which generates the first X-ray.

The primary collimator 2 limits the range irradiated with the first X-ray to a predetermined range. That is, the primary collimator 2 limits the first X-ray emitted from the beryllium window to the inside of the cylinder having a predetermined radius extending along the Z axis.

The secondary target 3 is a block body including a target surface 31 on which the first X-ray is incident, and is configured such that the second X-ray generated by the first X-ray incident on the target surface 31 is emitted to the liquid sample LS and the X-ray transmission film 5 arranged above the secondary target 3. Specifically, as illustrated in FIGS. 1, 3, and 4, the target surface 31 is inclined with respect to the XZ plane and the YX plane. In the present embodiment, the target surface 31 is inclined with respect to the XZ plane and the YZ plane such that a normal vector with respect to the target surface 31 is (X,Y,Z) = (-1/2,1/√2,-1/2).

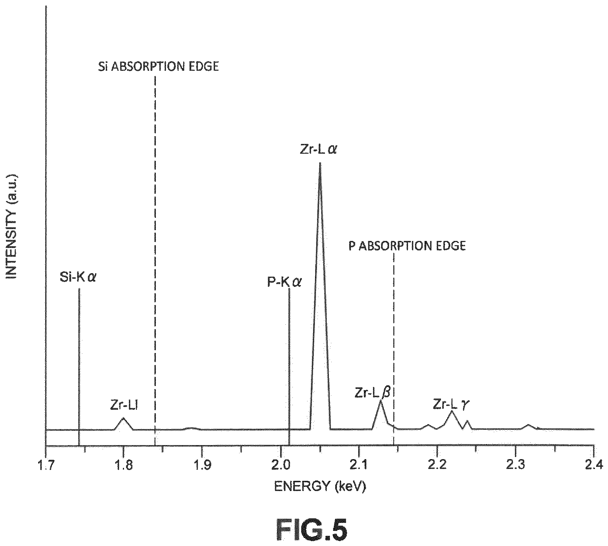

The main energy of the second X-ray emitted from the secondary target 3 is selected so as to excite silicon (Si) as the first element contained in the liquid sample LS and to generate the corresponding fluorescent X-ray, and not to excite phosphorus (P) as the second element contained in the liquid sample LS and not to generate the fluorescent X-ray therefrom. That is, the secondary target 3 is configured to satisfy E1 < EP < E2, where E1 represents the energy of the absorption edge of silicon (Si) as the first element, E2 represents the energy of the absorption edge of phosphorus (P) as the second element, and EP represents the energy peak of the second X-ray generated by the first X-ray on the target surface 31. In the present embodiment, the secondary target 3 is formed of phosphorus (P) that is not a target to be measured. Here, as illustrated in the graph of FIG. 5, the energy EP of the Kα ray, which is the fluorescent X-ray generated when the first X-ray is incident on phosphorus (P), is smaller than the energy E2 at the absorption edge of phosphorus (P) and larger than the energy E1 at the absorption edge of silicon (Si). That is, because the energy of the absorption edge of a certain element becomes larger than the energy of the second X-ray generated by the first X-ray being incident, the fluorescent X-ray of the second element can be prevented from being emitted from the liquid sample LS by the second X-ray generated in the secondary target 3, by forming the secondary target 3 with the second element which is to be excluded in the liquid sample LS.

As illustrated in FIGS. 1 to 4, the secondary collimator 4 limits the irradiation range and the irradiation direction of the second X-ray generated in the secondary target 3 with respect to the sample surface SP. That is, an irradiation optical axis LA of the second X-ray is defined in a predetermined direction by the secondary collimator 4.

The X-ray transmission film 5 is a film extending along a horizontal plane, and is in contact with the liquid sample LS on an upper surface of the film to form the sample surface SP. The X-ray transmission film 5 is, for example, a resin film having a film thickness in units of micrometers (µm), and is configured to suppress attenuation of the incident second X-ray and the fluorescent X-ray generated in the liquid sample LS as much as possible. In the present embodiment, the X-ray transmission film 5 is formed of polyimide or aromatic polyether ketone. The second X-ray generated by the secondary target 3 passes through the X-ray transmission film 5 and enters the liquid sample LS to a predetermined depth. Here, the predetermined depth is about several tens of µm to several hundreds of µm. The second X-ray incident on the liquid sample LS generates the fluorescent X-ray and simultaneously generates the scattered X-ray for silicon (Si) contained in the liquid sample LS as described above. The X-ray transmission film 5 may be made of any one of polyphenylene sulfide, aramid, graphene, and diamond-like carbon.

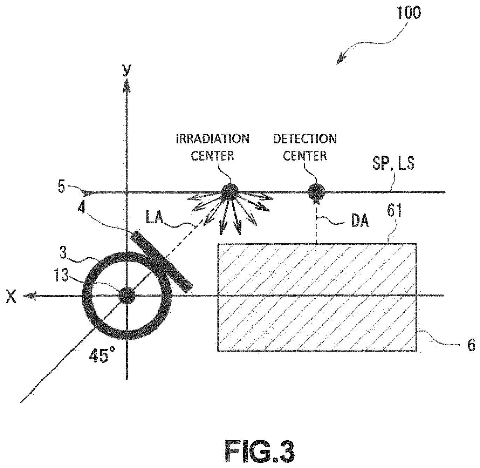

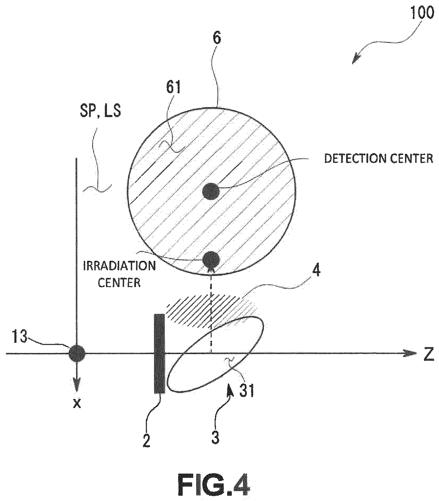

The detector 6 detects the fluorescent X-ray generated in the liquid sample LS, and is arranged such that a detection surface 61 of the detector is parallel to the sample surface SP. That is, a detection optical axis DA of the detector 6 is provided so as to be perpendicular to the sample surface SP, and a detection center, which is an intersection of the sample surface SP and the detection optical axis DA, is arranged immediately above the detector 6 as illustrated in FIGS. 3 and 4. The detector 6 is arranged such that at an outer peripheral portion of the detection surface 61 is positioned immediately below the irradiation center. Specifically, as illustrated in each drawing, an irradiation center, which is an intersection of the irradiation optical axis LA of the second X-ray generated in the secondary target 3 and the sample surface SP, and the detection center are configured to be displaced by a predetermined distance from each other on the sample surface SP. In the present embodiment, the irradiation center is separated from the detection center by a predetermined distance in the X-axis direction according to the direction in which the target surface 31 of the secondary target 3 is inclined, and the separation distance is set to, for example, 3 mm or more and 10 mm or less. In particular, as illustrated in FIG. 3, because the irradiation optical axis LA of the second X-ray and the detection optical axis DA of the detector 6 are arranged to be displaced from each other, a ratio of the fluorescent X-ray among the X-ray detected by the detector 6 can be increased for the following reasons. In this example, the scattered X-ray generated at the irradiation center has dependency on a scattering angle, and a component having high intensity is generated around a direction (Y-axis direction) perpendicular to the sample surface SP. In the present embodiment, because the detection center is separated from the irradiation center and is arranged at the outer edge of the detection surface 61 immediately below the irradiation center, a high-intensity direction component among the scattered X-ray can be prevented from entering the solid angle of the visual field of the detector 6 and a low-intensity component with a shallow scattering angle can be mainly detected. On the other hand, because the fluorescent X-ray has no dependency on the angle and are uniformly emitted in all directions, even if the irradiation center and the detection center are shifted from each other, the amount of fluorescent X-ray incident on the solid angle of the visual field of the detector 6 is not reduced as much as the scattered X-ray described above. As a result, in the output of the detector 6, the background value due to the influence of the scattered X-ray on the sample surface SP of the second X-ray can be reduced, and the detection lower limit of the fluorescent X-ray mainly of silicon (Si) can be lowered.

The function of a concentration calculator 7 is realized by, for example, a so-called computer including a central processing unit (CPU), a memory, an analog-to-digital (A/D) converter, a digital-to-analog (D/A) converter, and various input/output units. The concentration calculator 7 calculates the concentration of silicon (Si) contained in the liquid sample LS based on the output of the detector 6 by the CPU executing a program stored in the memory and cooperating with various devices. As a specific calculation formula, for example, a known formula is used.

According to the X-ray fluorescence analyzer 100 of the present embodiment configured as described above, the concentration of silicon (Si), which is a trace element contained in the liquid sample LS in the liquid state, can be measured based on the fluorescent X-ray without cooling or evaporating the liquid sample LS.

That is, in the present embodiment, because the irradiation center of the second X-ray on the sample surface SP and the detection center of the detector 6 are separated from each other, a direction component having high intensity among the scattered X-ray generated on the sample surface SP is not easily detected by the detection surface 6, and the ratio of the fluorescent X-ray of silicon (Si) among the X-ray detected by the detector 6 can be increased. As a result, the detection lower limit of silicon (Si) can be lowered as compared with the conventional case.

Further, because at least the target surface 31 of the secondary target 3 is formed of phosphorus (P), the energy of the second X-ray generated in the secondary target 3 reduces the generation of the fluorescent X-ray of phosphorus (P) contained in a large amount in the liquid sample LS, and generates only the fluorescent X-ray of silicon (Si) contained in a small amount in the liquid sample LS. Therefore, the peak of the fluorescent X-ray of silicon (Si) is not hidden at a tail portion of the peak of the fluorescent X-ray of phosphorus (P) existing in a large amount. Therefore, the concentration of silicon (Si) can be accurately measured from the low-intensity fluorescent X-ray of a light element such as silicon (Si). In other words, conventionally, the concentration of trace elements has not even been attempted to be measured industrially because separating and analyzing each element by the X-ray fluorescence analysis have been considered to be difficult, due to the fact that the liquid sample contains elements having continuous atomic numbers, such as silicon (Si) and phosphorus (P), and has a very large number of the second elements as interference elements with respect to the first element to be measured; however, it becomes possible to measure the concentration of the trace element by the X-ray fluorescence analyzer 100 of the present embodiment.

Further, the secondary target 3, the liquid sample LS, and the detector 6 are arranged close to each other. This shortens the optical path length of each X-ray, which causes attenuation not to easily occur. In addition, because the film thickness of the X-ray transmission film 5 is set thin, the attenuation occurring when the X-ray passes through the X-ray transmission film 5 can also be reduced. Therefore, the fluorescent X-ray can be detected with the intensity necessary for measuring the concentration of silicon (Si) which is a light element and is contained in a small amount in the liquid sample LS.

Other embodiments are described.

The X-ray fluorescence analyzer according to the present invention is not limited to the one that measures the concentration of silicon (Si) contained in the phosphoric acid solution. For the liquid sample containing the first element to be measured and the second element having the atomic number larger than the atomic number of the first element, the X-ray fluorescence analyzer can be used to measure the concentration of the first element based on the fluorescent X-ray. The atomic numbers of the first element and the second element have been described to differ by one, but the atomic numbers of the first element and the second element may differ by two, or the atomic numbers may differ by larger than two.

In the above embodiment, the X-ray fluorescence analysis is performed as it is without sampling and then cooling or evaporating a part of the liquid sample, but for example, the X-ray fluorescence analysis may be performed in a state where the liquid sample is flowing to realize in-line concentration measurement in real time. For example, a branch channel formed of an X-ray transmission film may be formed in a part of a pipe through which the liquid sample flows, and the X-ray fluorescence analysis may be performed in that part, or a window formed of the X-ray transmission film may be formed in a part of the pipe, and the X-ray fluorescence analysis may be performed through the window.

The arrangement and orientation of each device constituting the X-ray fluorescence analyzer are not limited to those described in the above embodiment. For example, the detection optical axis of the detector may be configured to be obliquely incident on the sample surface instead of being perpendicularly incident on the sample surface. In this case, in the arrangement illustrated in FIGS. 1 to 4, the detection surface of the detector may be inclined toward the side of the X-ray source from which the first X-ray is emitted. By further displacing the irradiation center and the detection center in this manner, the scattered X-ray generated on the detection surface of the liquid sample is hardly detected by the detector, and the ratio of the detected fluorescent X-ray can be increased. Note that the direction in which the detector is inclined may be appropriately changed according to the type of the liquid sample and the device to be used, and for example, the detector may be inclined such that the detection surface faces the side opposite to the X-ray source. In addition, the target surface of the secondary target is not limited to the plane inclined with respect to both the XZ plane and the YZ plane as in the above embodiment, and may be inclined with respect to only one of the XZ plane and the YZ plane.

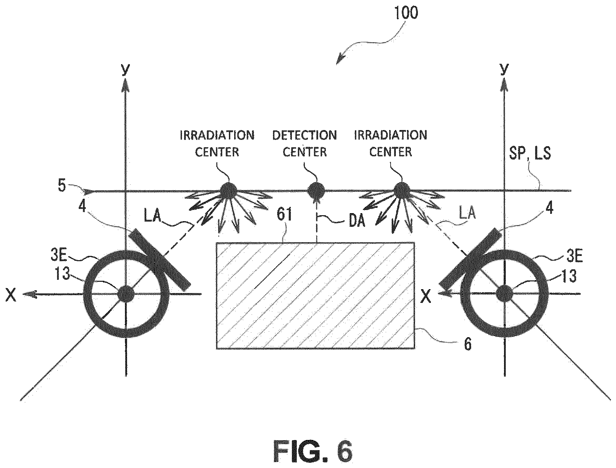

Further, as illustrated in FIG. 6, the secondary target 3 may include a plurality of target elements 31, and the sample surface SP may be irradiated with the second X-ray generated by each of the target elements 31 separately. More specifically, the target elements 31 may be arranged in a substantially V shape in mirror symmetry with respect to the detection optical axis DA so as to sandwich the detector 6. In this way, because the fluorescent X-rays generated by the first element from the sample surface SP are incident on the detector 6 symmetrically with respect to the detection optical axis DA, the detected intensity can be made about twice as large as the detected intensity in the above embodiment. As a result, the measurement time can be shortened to about half, or the statistical measurement error can be reduced with the same measurement time to obtain a more accurate measurement result.

The element constituting the secondary target is not limited to phosphorus (P), and may be zirconium (Zr) as shown in FIG. 5. The Lα ray, which is a component of the fluorescent X-ray of zirconium, satisfies the above-described relationship between the energies, and a similar effect can be obtained. The secondary target may be formed of yttrium (Y). In addition, any element can be used as the secondary target as long as the element satisfies E1 < EP < E2 and generates the second X-ray.

In the present invention, various embodiments are conceivable depending on the relationship of atomic numbers and the relationship of concentrations between the first element and the second element to be measured. For example, the X-ray fluorescence analyzer may be selected such that the element constituting the secondary target satisfies E1 < EP < E2 in a state where the irradiation center and the detection center are matched without being displaced on the sample surface. Alternatively, the fluorescent X-rays of both the first element and the second element may be generated in a state where the irradiation center and the detection center are shifted from each other by a predetermined distance.

In addition, the material constituting the secondary target described in the embodiment may be used as a material for generating the primary X-ray, and the sample may be directly irradiated with the primary X-ray.

In addition, various modifications may be made to each embodiment or some of the embodiments may be combined as long as the modifications do not contradict the gist of the present invention.

### Industrial Applicability

According to the present invention, it is possible to provide the X-ray fluorescence analyzer that can accurately obtain the concentration of the first element from the peak intensity of the fluorescent X-ray of the first element even in the case where the atomic numbers of the first element and the second element are close to each other and the concentration of the first element is much smaller than the concentration of the second element.

## Claims

1. An X-ray fluorescence analyzer configured to analyze a liquid sample containing a first element to be measured and a second element having an atomic number larger than the atomic number of the first element, the X-ray fluorescence analyzer comprising:
an X-ray source that emits a first X-ray;
a secondary target that is excited by the first X-ray and generates a second X-ray;
a detector that detects a fluorescent X-ray generated by the second X-ray incident on the liquid sample; and
a concentration calculator that calculates a concentration of the first element in the liquid sample based on an output of the detector, wherein,
E1 < EP < E2, where E1 represents an energy of an absorption edge of the first element, E2 represents an energy of an absorption edge of the second element, and EP represents an energy peak of the second X-ray.

2. The X-ray fluorescence analyzer according to claim 1, wherein
the first element is silicon (Si),
the second element is phosphorus (P), and
the secondary target is formed of phosphorus (P).

3. The X-ray fluorescence analyzer according to claim 1, wherein
the first element is silicon (Si),
the second element is phosphorus (P), and
the secondary target is formed of yttrium (Y) or zirconium (Zr).

4. The X-ray fluorescence analyzer according to any one of claims 1 to 3, wherein an irradiation center and a visual field center are separated from each other on a sample surface of the liquid sample, the irradiation center being an intersection of an irradiation optical axis of the second X-ray to the sample surface and the visual field center being an intersection of a detection optical axis of the detector to the sample surface.

5. The X-ray fluorescence analyzer according to any one of claims 1 to 4, further comprising
an X-ray transmission film that is in contact with the liquid sample and forms the sample surface, wherein
the liquid sample is irradiated with the second X-ray passing through the X-ray transmission film.

6. The X-ray fluorescence analyzer according to claim 5, wherein the X-ray transmission film is formed of polyimide, aromatic polyether ketone, polyphenylene sulfide, aramid, graphene, or diamond-like carbon.

7. The X-ray fluorescence analyzer according to any one of claims 1 to 6, wherein,
when an irradiation optical axis of the first X-ray is defined as a Z axis, an axis orthogonal to the Z axis at a light source point of the X-ray source and forming an XZ plane parallel to the sample surface is defined as an X axis, and an axis passing the light source point of the X-ray source and orthogonal to the X axis and the Z axis is defined as a Y axis,
the secondary target includes a target surface on which the first X-ray is incident, and
the target surface is inclined with respect to the XZ plane and also with respect to a YZ plane.

8. The X-ray fluorescence analyzer according to claim 7, wherein the target surface is inclined with respect to the XZ plane and the YZ plane to make a normal vector with respect to the target surface be (X,Y,Z) = (-1/2,1/√2,-1/2).

9. The X-ray fluorescence analyzer according to claim 7 or 8, wherein
the detector includes a detection surface that detects a fluorescent X-ray, and the detection surface is inclined with respect to the XZ plane, and the detection surface faces a side of the X-ray source.

10. The X-ray fluorescence analyzer according to any one of claims 1 to 9, wherein the secondary target includes a plurality of target elements arranged so as to generate the second X-ray separately.

11. The X-ray fluorescence analyzer according to claim 10, wherein two of the target elements are arranged so as to sandwich the detector.

12. The X-ray fluorescence analyzer according to any one of claims 4 to 11, wherein the irradiation center and the visual field center are separated by a distance of 3 mm or more and 10 mm or less.
